# EUROPEAN PATENT SPECIFICATION

(11) **EP 2 421 141 B1**
(45) Date of publication and mention of the grant of the patent: **15.05.2013**
(21) Application number: 10173154.5
(22) Date of filing: 18.08.2010
(51) Int. Cl.: H02M 7/487

(54) **Line and neutral point clamped inverter**
Ausgangsspannungs- und Neutralpunkt geklemmter Umrichter
Onduleur clampé par le neutre et la ligne

(43) Date of publication of application: 22.02.2012
(73) Proprietor: ABB Oy, 00380 Helsinki (FI)
(72) Inventor: Paakkinen, Mikko, 02320, Espoo (FI); Jussila, Matti T., 01610, Vantaa (FI)
(74) Representative: Valkeiskangas, Tapio Lassi Paavali

(56) References cited:
- DE-U1-202010 000 284
- US-A1- 2008 298 103
- AKIRA NABAE ET AL: "A New Neutral-Point-Clamped PWM Inverter", IEEE TRANSACTIONS ON INDUSTRY APPLICATIONS, IEEE SERVICE CENTER, PISCATAWAY, NJ, US, vol. 43, no. 5, 1 September 1981 (1981-09-01), pages 518-523, XP011213024, ISSN: 0093-9994

## Description

### FIELD OF THE INVENTION

The present invention relates to inverter topologies and particularly to a solar inverter topology for supplying a grid.

### BACKGROUND OF THE INVENTION

The purpose of a solar inverter is to convert a DC voltage produced by solar cells into an AC voltage with high efficiency. A typical generic inverter uses 2-level (line-to-neutral) topology, where an output is tied either to the positive pole or the negative pole of a DC link. The efficiency can be increased by using a 3-level (line-to-neutral) topology, where the output can be tied to three potentials: positive or negative pole of the DC link or a neutral point.

Another important aspect of a solar inverter is a capability of minimizing high-frequency common-mode voltages between the DC link and the protective ground. If these high-frequency common-mode voltages are present, high-frequency common-mode currents may flow through parasitic capacitances of the photovoltaic panels and possibly damage the photovoltaic panels. The minimizing of the common-mode voltage is therefore critical in photovoltaic inverter applications.

Publication *A new neutral-point-clamped PWM inverter, A. Nabae, I. Takahashi, & H. Akagi* discloses an NPC (*Neutral Point Clamped*) inverter topology which can be used to minimize the generation of the harmful high-frequency common-mode voltage. The NPC inverter uses 3-level (line-to-neutral) modulation and can have 5-level (line-to-line) output voltage, where the output voltage is measured between two output lines.

In order to avoid the common-mode voltage, what is called a "neutral point zero state" may be used in the NPC inverters. In a zero state the output lines have no connection to the DC link. In addition to this, the outputs are tied to the same potential, the neutral point, in a neutral point zero state. The outer switches in the inverter legs are in a non-conducting state and the current flows through two inner switches and two diodes.

By using the neutral point zero state and 3-level (line-to-line) output voltage generation the common-mode voltage can be eliminated. The use of a 3-level (line-to-neutral) modulation also increases efficiency compared to a 2-level (line-to-neutral) modulation.

However, one of the disadvantages associated with the above arrangement is that there are always four power semiconductors on the route of the current. These power semiconductors on the route of the current increase power losses.

The document DE 20 2010 000 284, published on May 6th 2010, discloses a Neutral Point Clamped (NPC) inverter using neutral prior zero state for preventing common mode voltage, as well as short-cutting the upper and lower switches of the inverter bridge for decoupling the load and providing a path for current having less power semiconductors.

### BRIEF DESCRIPTION OF THE INVENTION

An object of the present invention is to provide an apparatus and a method so as to alleviate the above disadvantage. The object of the invention is achieved by an arrangement and a method which are characterized by what is stated in the independent claims. The preferred embodiments of the invention are disclosed in the dependent claims.

The invention is based on the idea of providing new paths for current in the neutral point zero state. Routes with only two power semiconductors can be established by using clamping the inverter legs also from the line side. The power losses thus decrease and better efficiency can be achieved.

### BRIEF DESCRIPTION OF THE DRAWINGS

In the following the invention will be described in greater detail by means of preferred embodiments with reference to the attached drawings, in which
Figure 1 illustrates a simplified diagram of an inverter according to the present invention and
Figure 2 illustrates the paths for currents in an embodiment according to the present invention.

### DETAILED DESCRIPTION OF THE INVENTION

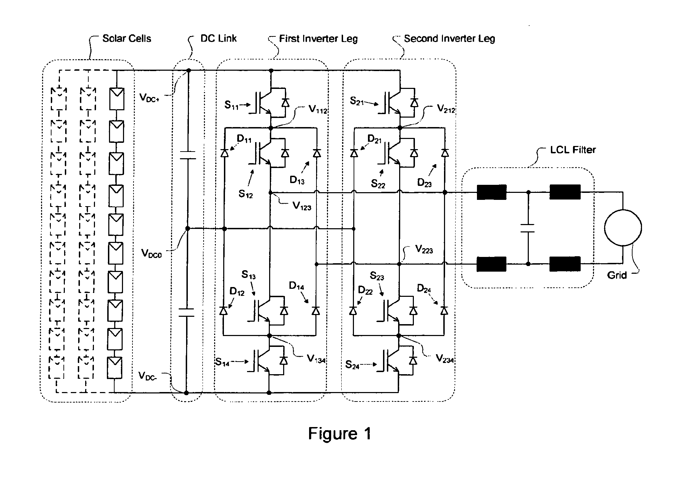

Figure 1 illustrates a simplified diagram of an inverter according to the present invention. The inverter supplies a grid and comprises a DC link, which comprises two capacitor units in series and a neutral point V_{DC0} between the capacitor units. The DC link in Figure 1 is supplied by solar cells. The DC link may also be supplied by other types of power sources. The power source may for instance be a fuel cell, a rechargeable battery bank or a boost converter. The converter may also have a galvanic isolation between its input and output.

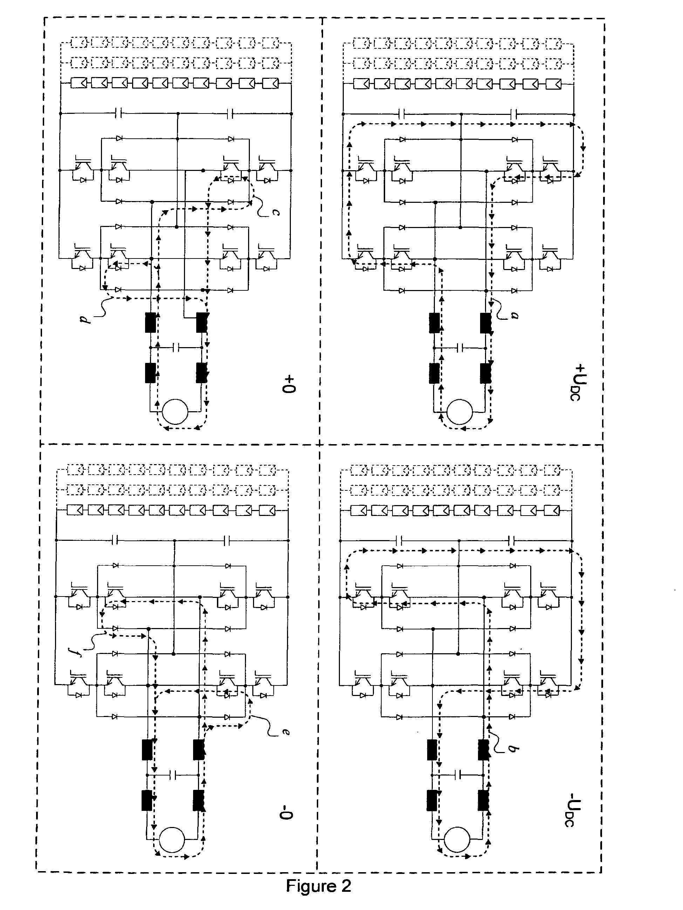

The inverter further comprises a first inverter leg and a second inverter leg, both legs being connected between the poles Voc+ and V_{DC}- of the DC link. Both inverter legs comprise four switching devices S_{*n*1} - S_{*n*4} (*n*∈ {1,2}) connected in series. Each switching device S_{*n*1} - S_{*n*4} has a conducting state and a non-conducting state and the switching devices S_{*n*1} - S_{*n*4} together form a low resistance route from the positive pole of the DC link to the negative pole of the DC link when all switching devices S_{*n*1} - S_{*n*4} are in the conducting state. The switching devices S_{*n*1} - S_{*n*4} may be for instance IGBTs, as in Figure 2, or power MOSFETs. In this embodiment each switching device S₁₁ - S₁₄ and S₂₁ - S₂₄ is paired with a freewheeling diode. In some embodiments of the present invention, some of the switching devices may be IGBTs and some power MOSFETs.

Both inverter legs comprise an upper connection point V_{*n*12} between the two topmost switching devices S_{*n*1} and S_{*n*2}, a lower connection point V_{*n*34} between the two bottommost switching devices S_{*n*3} and S_{*n*4} and an output V_{*n*23} between the two middle switching devices S_{*n*2} and Sₙ₃. The output is filtered with a balanced LCL filter.

The inverter legs are clamped to the neutral point V_{DC0}. Both inverter legs comprise a first rectifier device D_{*n*1} which is connected between the DC link neutral point V_{DC0} and the leg upper connection point Vₙ₁₂ allowing flow of current from the DC link neutral point V_{DC0} to the leg upper connection point V_{*n*12}, and a second rectifier device D_{*n*2} connected between the DC link neutral point V_{DC0} and the leg lower connection point V_{*n*34} allowing flow of current from the leg lower connection point V_{*n*34} to the DC link neutral point V_{DC0}. The first rectifier device D_{*n*1} and second rectifier D_{*n*2} device tie the output V_{*n*23} of each inverter leg to the neutral point in the neutral point zero state.

The inverter legs are clamped also from the output line side. Both inverter legs comprise a third rectifier D_{*n*3} device connected between the upper connection point V_{*n*12} of the leg and the output V_{*m*23} (*m ∈* {1,2}, *m* ≠ *n*) of the other leg allowing flow of current from the output V_{*m*23} of the other leg to the leg upper connection point V_{*n*12}. and a fourth rectifier device D_{*n*4} connected between the output V_{*m*23} of the other leg and the lower connection point V_{*n*34} of the leg allowing flow of current from the lower connection point V_{*n*34} to the output V_{*m*23} of the other leg.

The third rectifier D_{*n*3} and fourth rectifier D_{*n*4}, in co-operation with the inverter leg middle switches S_{*n*2} and S_{*n*3}, provide a path for current which has only two power semiconductors: a diode D_{*n*3} or D_{*n*4} and a switch S_{*n*2} or S_{*n*3}, respectively.
Table 1 below illustrates a 3-level (line-to-line) output voltage modulation scheme for an embodiment according to the present invention. The scheme has five switching states: +U_{DC}, +0, ±0, -0 and -U_{DC}, represented in Table 1 by five main columns labelled respectively. The rows of the table represent the states of the individual switches. "1" stands for the conducting state and "0" for the non-conducting state.

**Table 1. A modulation scheme for the present invention**

| | **+U_{DC}** | **+0** | **±0** | **-0** | **-U_{DC}** |
|---|---|---|---|---|---|
| **S₁₁** | **1** | 0 | 0 | 0 | 0 |
| **S₁₂** | **1** | **1** | **1** | 0 | 0 |
| **S₁₃** | 0 | 0 | **1** | **1** | **1** |
| **S₁₄** | 0 | 0 | 0 | 0 | **1** |
| **S₂₁** | 0 | 0 | 0 | 0 | **1** |
| **S₂₂** | 0 | 0 | **1** | **1** | **1** |
| **S₂₃** | **1** | **1** | **1** | 0 | 0 |
| **S₂₄** | **1** | 0 | 0 | 0 | 0 |

The voltage between the inverter leg outputs can in this modulation scheme be set to three potentials: +*U_{DC}, 0* and -*U_{DC}*, where *U_{DC}* is the voltage potential of the DC link and *0* is zero potential. Each of these potentials can be formed without changes in common-mode voltage.

The potentials +*U_{DC}* and *-U_{Dc}* are formed by using states +U_{DC} and -U_{DC}, respectively. The upmost switching devices S_{*n*1} and S_{*n*2} of an inverter leg and the two bottommost switching devices S_{*n*3} and S_{*n*4} of the other inverter leg are set to a conducting state, as shown in Table 1. The switching devices provide a path for current from the DC link to the grid. In Figure 2, a section denoted with +U_{DC} illustrates the route *a* for current in the state +U_{DC.} Similarly, a section denoted with -U_{DC} illustrates the route *b* for current in the state -U_{DC}.

The zero potential *0* is formed using one of three neutral point zero states +0, ±0 or -0. The state +0 provides two paths for current in the same direction as in state +U_{DC}. The routes *c* and *d* for current in the state +0 are illustrated in section +0 of Figure 2. In a similar manner, the state -0 provides two paths for current in the same direction as in state -U_{DC}. The routes *e* and *f* for current in the state -0 are illustrated in section -0 of Figure 2. The state ±0 provides the same paths *c*, *d, e* and *f* as states +0 and -0 together.

It is also possible to form neutral point zero states with one path for current. In a zero state, a neutral point zero state with one current path (*c, d, e* or *f*) may be formed by setting only one of the middle switching devices S₁₂, **S** ₁₃, S₂₂ or S₂₃ to a conducting state.

Other combinations of routes for current in the neutral point zero state are also possible. For instance, both middle switching devices of an inverter leg may be set to a conducting state. The leg thus provides routes to both directions of current.

In case the DC link of an inverter according to the present invention is supplied by a switching converter with galvanic isolation, modulation methods with 5-level output voltage (line-to-line) may be used, since the galvanic isolation effectively prevents the common-mode voltages from advancing to the grid side.

Other modulation methods and switching combinations may also be used to control embodiments according to the present invention.

It will be obvious to a person skilled in the art that the inventive concept can be implemented in various ways. The invention and its embodiments are not limited to the examples described above but may vary within the scope of the claims.

## Claims

1. An inverter for supplying a grid, where the inverter comprises
a DC link comprising two capacitor units in series and a neutral point (V_{DC0}) between the capacitor units, and
a first and a second inverter leg, both inverter legs being connected between the poles (V_{DC+} and V_{DC-}) of the DC link and both inverter legs comprising
four switching devices (S_{*n*1} - S_{*n*4}) connected in series, each switch having a conductive state and a non-conductive state and the switches together forming a low resistance route from the positive pole of the DC link to the negative pole of the DC link when all are in the conducting state,
an upper connection point (V_{*n*12}) between the two topmost switching devices (S_{*n*1}, S_{*n*2}),
a lower connection point (V_{*n*34}) between the two bottommost switching devices (S_{*n*3}, S_{*n*4}),
an output (V_{*n*23}) between the two middle switching devices (S_{*n*2}, S_{*n*3}),
a first rectifier device (D_{*n*1}) connected between the DC link neutral point (V_{DC0}) and the leg upper connection point (V_{*n*12}) allowing flow of current from the DC link neutral point (V_{DC0}) to the leg upper connection point (V_{*n*12}), and
a second rectifier device (D_{*n*2}) connected between the DC link neutral point (V_{DC0}) and the leg lower connection point (V_{*n*34}) allowing flow of current from the leg lower connection point (V_{*n*34}) to the DC link neutral point (V_{DC0}),
**characterized by** each inverter leg further comprising
a third rectifier device (D_{*n*3}) connected the between upper connection point (V_{*n*12}) of the leg and the output (V_{*m*23}) of the other leg allowing flow of current from the output (V_{*m*23}) of the other leg to the leg upper connection point (V_{*n*12}), and
a fourth rectifier device (D_{*n*4}) connected between the output (V_{*m*23}) of the other leg and the lower connection point (V_{*n*34}) of the leg allowing flow of current from the lower connection point (V_{*n*34}) to the output (V_{*m*23}) of the other leg.

2. An inverter according to claim 1, **characterized in that** the switching devices are all IGBTs or all power MOSFETs.

3. An inverter according to claim 1, **characterized in that** some of the switching devices are IGBTs and some of the switching devices are power MOSFETs.

4. An arrangement comprising an inverter according to any of claims 1 to 3, **characterized in that** the DC link of the inverter is supplied by a switching converter, which has a galvanic isolation between its input and output.

5. An arrangement comprising an inverter according to any of claims 1 to 3, **characterized in that** the DC link of the inverter is supplied by a solar generator.

6. An arrangement comprising an inverter according to any of claims 1 to 3, **characterized in that** the DC link of the inverter is supplied by fuel cells.

7. An arrangement comprising an inverter according to any of claims 1 to 3, **characterized in that** the DC link of the inverter is supplied by a rechargeable battery or a rechargeable battery bank.

8. An arrangement comprising an inverter according to any of claims 1 to 3, **characterized in that** the DC link of the inverter is supplied by a boost converter.

9. An inverter according to claim 1, **characterized in that** each switching device is paired with a freewheeling diode.

10. A method for controlling an inverter according to claim 1, **characterized in that** the method comprises a step of
setting one or more of the middle switching devices to conducting state so that the inverter is set to a neutral point zero state.

11. A method according to claim 10, **characterized in that** the method comprises a step of
setting the inverter to a neutral point zero state where the current has one path.

12. A method according to claim 10, **characterized in that** the method uses only switching states which have same common-mode voltage.

## Patentansprüche

1. Ein Umrichter zum Versorgen eines Netzwerks, wobei der Umrichter Folgendes aufweist
einen DC-Zwischenkreis, welcher zwei in Serie geschaltete Kondensatoreinheiten und einen Neutralpunkt (V_{DC0}) zwischen den Kondensatoreinheiten aufweist, und
einen ersten und einen zweiten Umrichterzweig, wobei beide Umrichterzweige zwischen den Polen (V_{DC+} und V_{DC-}) des DC-Zwischenkreises geschaltet sind und beide Umrichterzweige Folgendes aufweisen
- vier in Serie geschaltete Schaltgeräte (S_{*n*1} - S_{*n*4}), wobei jeder Schalter einen leitenden Zustand und einen nicht-leitenden Zustand haben und die Schalter zusammen eine niederohmige Route von dem positiven Pol des DC-Zwischenkreises zu dem negativen Pol des DC-Zwischenkreises bilden, wenn sich alle in dem leitenden Zustand befinden,
- einen oberen Verbindungspunkt (V_{*n*12}) zwischen den beiden obersten Schaltgeräten (S_{*n*1}, S_{*n*2}),
- einen unteren Verbindungspunkt (V_{*n*34}) zwischen den beiden untersten Schaltgeräten (S_{*n*3}, S_{*n*4}),
- einen Ausgang (V_{*n*23}) zwischen den zwei mittleren Schaltgeräten (S_{*n*2}, S_{*n*3}),
- ein erstes Gleichrichtergerät (D_{*n*1}), welches zwischen dem Neutralpunkt (V_{DC0}) des DC-Zwischenkreises und dem oberen Verbindungspunkt (V_{*n*12}) des Zweigs geschaltet ist, wobei ein Fluss von Strom von dem Neutralpunkt (V_{DC0}) des DC-Zwischenkreises zu dem oberen Verbindungspunkt (V_{*n*12}) des Zweigs erlaubt wird, und
- ein zweites Gleichrichtergerät (D_{*n*2}), welches zwischen dem Neutralpunkt (V_{DC0}) des DC-Zwischenkreises und dem unteren Verbindungspunkt (V_{*n*34}) des Zweigs geschaltet ist, wobei ein Fluss von Strom von dem unteren Verbindungspunkt (V_{*n*34}) des Zweigs zu dem Neutralpunkt (V_{DC0}) des DC-Zwischenkreises erlaubt wird,
**dadurch gekennzeichnet, dass** jeder Umrichterzweig weiter Folgendes aufweist
ein drittes Gleichrichtergerät (D_{*n*3}), welches zwischen dem oberen Verbindungspunkt (V_{*n*12}) des Zweigs und dem Ausgang (V_{*m*23}) des anderen Zweigs geschaltet ist, wobei ein Fluss von Strom aus dem Ausgang (V_{*m*23}) des anderen Zweigs zu dem oberen Verbindungspunkt (V_{*n*12}) des Zweigs erlaubt wird, und
ein viertes Gleichrichtergerät (D_{*n*4}), welches zwischen dem Ausgang (V_{*m*23}) des anderen Zweigs und dem unteren Verbindungspunkt (V_{*n*34}) des Zweigs geschaltet ist, wobei ein Fluss von Strom von dem unteren Verbindungspunkt (V_{*n*34}) zu dem Ausgang (V_{*m*23}) des anderen Zweigs erlaubt wird.

2. Ein Umrichter gemäß dem Patentanspruch 1, **dadurch gekennzeichnet, dass** die Schaltgeräte alle IGBTs oder alle Hochleistungs- MOSFETs sind.

3. Ein Umrichter gemäß dem Patentanspruch 1, **dadurch gekennzeichnet, dass** einige der Schaltgeräte IGBTs sind und einige der Schaltgeräte Hochleistungs-MOSFETs sind.

4. Eine Anordnung, welche einen Umrichter gemäß einem der Patentansprüche 1 bis 3 aufweist, **dadurch gekennzeichnet, dass** der DC-Zwischenkreis des Umrichters durch einen Schaltwandler versorgt wird, welcher eine galvanische Isolierung zwischen seinem Eingang und Ausgang aufweist.

5. Eine Anordnung, welche einen Umrichter gemäß einem der Patentansprüche 1 bis 3 aufweist, **dadurch gekennzeichnet, dass** der DC-Zwischenkreis durch einen solaren Generator versorgt wird.

6. Eine Anordnung, welche einen Umrichter gemäß einem der Patentansprüche 1 bis 3 aufweist, **dadurch gekennzeichnet, dass** der DC-Zwischenkreis durch Brennstoffzellen versorgt wird.

7. Eine Anordnung, welche einen Umrichter gemäß einem der Patentansprüche 1 bis 3 aufweist, **dadurch gekennzeichnet, dass** der DC-Zwischenkreis des Umrichters durch eine aufladbare Batterie oder eine Reihe von aufladbaren Batterien versorgt wird.

8. Eine Anordnung, welche einen Umrichter gemäß einem der Patentansprüche 1 bis 3 aufweist, **dadurch gekennzeichnet, dass** der DC-Zwischenkreis des Umrichters durch einen Aufwärtswandler versorgt wird.

9. Ein Umrichter gemäß dem Patentanspruch 1, **dadurch gekennzeichnet, dass** jedes Schaltgerät mit einer Freilaufdiode gepaart ist.

10. Ein Verfahren zum Steuern eines Umrichters gemäß dem Patentanspruch 1, **dadurch gekennzeichnet, dass** das Verfahren einen Schritt aufweist,
ein oder mehrere der mittleren Schaltgeräte auf den leitenden Zustand einzustellen, so dass der Umrichter auf einen Nullzustand des Neutralpunkts eingestellt ist.

11. Ein Verfahren gemäß dem Patentanspruch 10, **dadurch gekennzeichnet, dass** das Verfahren einen Schritt aufweist,
den Umrichter auf einen Nullzustand des Neutralpunkts einzustellen, wo der Strom einen Pfad hat.

12. Ein Verfahren gemäß dem Patentanspruch 10, **dadurch gekennzeichnet, dass** das Verfahren nur Schaltzustände verwendet, welche dieselbe Gleichtaktspannung aufweisen.

## Revendications

1. Onduleur destiné à alimenter un réseau électrique, dans lequel l'onduleur comprend une liaison en courant continu comprenant deux unités de condensateurs en série et un point neutre (V_{DC0}) situé entre les unités de condensateurs ; et
des première et seconde branches d'onduleur, les deux branches d'onduleur étant connectées entre les pôles (V_{DC+} et V_{DC-}) de la liaison en courant continu, les deux branches d'onduleur comprenant :
quatre dispositifs de commutation (Sₙ₁-Sₙ₄) connectés en série, chaque commutateur présentant un état conducteur et un état non conducteur, les commutateurs formant ensemble un chemin à faible résistance à partir du pôle positif de la liaison en courant continu vers le pôle négatif de la liaison en courant continu quand ils se trouvent tous dans l'état conducteur ;
un point de connexion supérieur (Vₙ₁₂) situé entre les deux dispositifs de commutation les plus hauts (Sₙ₁, Sₙ₂) ;
un point de connexion inférieur (Vₙ₃₄) situé entre les deux dispositifs de commutation les plus bas (Sₙ₃, Sₙ₄) ;
une sortie (Vₙ₂₃) située entre les deux dispositifs de commutation médians (Sₙ₂, Sₙ₃) ;
un premier dispositif de redressement (Dₙ₁) connecté entre le point neutre de la liaison en courant continu (V_{DC0}) et le point de connexion supérieur (Vₙ₁₂) de la branche, permettant une circulation de courant à partir du point neutre de la liaison en courant continu (V_{DC0}) vers le point de connexion supérieur (Vₙ₁₂) de la branche ; et
un deuxième dispositif de redressement (Dₙ₂) connecté entre le point neutre de la liaison en courant continu (V_{DC0}) et le point de connexion inférieur (Vₙ₃₄) de la branche, permettant une circulation de courant à partir du point de connexion inférieur (Vₙ₃₄) de la branche vers le point neutre de la liaison en courant continu (V_{DC0}) ;
**caractérisé en ce que** chaque branche d'onduleur comprend en outre :
un troisième dispositif de redressement (Dₙ₃) connecté entre le point de connexion supérieur (Vₙ₁₂) de la branche et la sortie (Vₘ₂₃) de l'autre branche, permettant une circulation de courant à partir de la sortie (Vₘ₂₃) de l'autre branche vers le point de connexion supérieur (Vₙ₁₂) de la branche ; et
un quatrième dispositif de redressement (Dₙ₄) connecté entre la sortie (Vₘ₂₃) de l'autre branche et le point de connexion inférieur (Vₙ₃₄) de la branche, permettant une circulation de courant à partir du point de connexion inférieur (Vₙ₃₄) vers la sortie (Vₘ₂₃) de l'autre branche.

2. Onduleur selon la revendication 1, **caractérisé en ce que** les dispositifs de commutation sont tous des IGBT ou sont tous des transistors de puissance MOSFET.

3. Onduleur selon la revendication 1, **caractérisé en ce que** certains des dispositifs de commutation sont des IGBT et certains des dispositifs de commutation sont des transistors de puissance MOSFET.

4. Agencement comprenant un onduleur selon l'une quelconque des revendications 1 à 3, **caractérisé en ce que** la liaison en courant continu de l'onduleur est alimentée par un convertisseur à découpage qui présente une isolation galvanique entre son entrée et sa sortie.

5. Agencement comprenant un onduleur selon l'une quelconque des revendications 1 à 3, **caractérisé en ce que** la liaison en courant continu de l'onduleur est alimentée par un générateur solaire.

6. Agencement comprenant un onduleur selon l'une quelconque des revendications 1 à 3, **caractérisé en ce que** la liaison en courant continu de l'onduleur est alimentée par des piles à combustible.

7. Agencement comprenant un onduleur selon l'une quelconque des revendications 1 à 3, **caractérisé en ce que** la liaison en courant continu de l'onduleur est alimentée par une batterie d'accumulateurs ou par un banc de batteries d'accumulateurs.

8. Agencement comprenant un onduleur selon l'une quelconque des revendications 1 à 3, **caractérisé en ce que** la liaison en courant continu de l'onduleur est alimentée par un convertisseur élévateur.

9. Onduleur selon la revendication 1, **caractérisé en ce que** chaque dispositif de commutation est apparié avec une diode de roue libre.

10. Procédé destiné à commander un onduleur selon la revendication 1, **caractérisé en ce que** le procédé comprend une étape consistant à :
placer un ou plusieurs des dispositifs de commutation médians à l'état conducteur de sorte que l'onduleur soit placé à un état zéro de point neutre.

11. Procédé selon la revendication 10, **caractérisé en ce que** le procédé comprend une étape consistant à :
placer l'onduleur à un état zéro de point neutre où le courant présente un chemin.

12. Procédé selon la revendication 10, **caractérisé en ce que** le procédé utilise seulement des états de commutation qui présentent la même tension de mode commun.
